# EUROPÄISCHE PATENTSCHRIFT

(11) **EP 0 807 813 B1**
(45) Veröffentlichungstag und Bekanntmachung des Hinweises auf die Patenterteilung: **06.12.2006**
(21) Anmeldenummer: 97106007.4
(22) Anmeldetag: 11.04.1997
(51) Int. Cl.: G01N 21/55, G01N 21/59, G01N 33/49

(54) **Vorrichtung für die Messung physiologischer Parameter von in einem extrakorporalen Kreislauf geführtem Blut**
Device for measuring physiologic parameters of blood in an extracorporal circulation
Dispositif de mesure des paramètres physiologiques du sang dans un système circulaire extracorporel

(30) Priorität: 14.05.1996 DE 19619513
(43) Veröffentlichungstag der Anmeldung: 19.11.1997
(73) Patentinhaber: Sorin Group Deutschland GmbH, 80939 München (DE)
(72) Erfinder: Hahn, Andreas, Dipl.-Ing., 82335 Berg (DE)
(74) Vertreter: Zangs, Rainer E.

(56) Entgegenhaltungen:
- EP-A- 0 670 143
- DE-A- 3 530 689
- DE-A- 3 644 213
- US-A- 4 320 978
- US-A- 4 444 498
- US-A- 5 422 483
- DATABASE INSPEC INSTITUTE OF ELECTRICAL ENGINEERS, STEVENAGE, GB Inspec No. 3969401, WOLFBEIS O S: "Fibre-optical chemical sensors and their applications in biosensing" XP002900032 & LASER UND OPTOELEKTRONIK, APRIL 1991, GERMANY, Bd. 23, Nr. 2, ISSN 0722-9003, Seiten 50-56,

## Beschreibung

Die Erfindung betrifft eine Vorrichtung für die Messung physiologischer Parameter von in einem extrakorporalen Kreislauf geführtem Blut.

Zu den physiologischen Parametern, auf deren Grundlage die Effizienz der extrakorporalen Zirkulation beurteilt werden kann, zählen neben anderen die Blutgaswerte, insbesondere die Sauerstoffsättigung des Blutes vor und nach der extrakorporalen Oxygenierung. Nur wenn diese Werte ständig ermittelt werden, kann die extrakorporale Zirkulation bezüglich Blutdurchfluß und Oxygenierung angepaßt werden. Aber auch der Hämatokrit stellt eine wichtige Größe für die Beurteilung des extrakorporal geförderten Blutes dar.

Optische Meßverfahren an extrakorporal zirkulierendem Blut, z.B. bei Operationen am Herz- und Kreislaufsystem unter Zuhilfenahme einer Herz-Lungen-Maschine (HLM) nutzen die Tatsache aus, daß aus einer Änderung des optischen Verhaltens des Blutes auf Änderungen der mikroskopischen Eigenschaften des Blutes und damit auch der sie beeinflussenden physiologischen Parameter geschlossen werden kann. Ausgenutzt werden sowohl das Rückstreu- oder Transmissionsverhalten sowie die Ortsverteilung von Absorptionsraten und Strahlungsverteilungen. Ein besonderer Vorteil optischer Messverfahren liegt darin, dass in der Regel der Messwert kontaktlos ermittelt werden kann.

Beispielsweise ist aus US-A-4.444.498 eine optische Messanordnung bekannt, bei der in den extrakorporalen Kreislauf eine Küvette eingesetzt wird, die ein ebenes Fenster besitzt, durch das zwei Leuchtdioden Licht unterschiedlicher Wellenlänge in das durch die Küvette geführte Blut einstrahlen. Das durch das Fenster reflektierte Licht wird von einem Fotosensor aufgenommen und das Sensorsignal ausgewertet. Das Sensorsignal ist prinzipbedingt zusätzlich vom Abstand zum Küvettenfenster, vom Winkel sowie vom Abstand und Winkel der Lichtquellen abhängig.

Generell weisen die bislang bekannten Messsysteme eine zu hohe Ungenauigkeit auf, so dass ein Regelkreis unter Einschluss der HLM auf der Basis der erzielten Messwerte nicht realisierbar ist. Ferner werden bei allen bekannten Systemen Einmalsensoren oder, wie etwa bei der oben beschriebenen Anordnung aus US-A-4.444.498, spezielle Einmalküvetten eingesetzt, auf die die wieder verwendbaren Sensoren aufgebracht werden.

Aus US 5.422.483 ist eine Analysevorrichtung bekannt, die mit einer im Infrarotbereich arbeitenden Lichtquelle eine in einen Probenhalter eingebrachte Probe analysiert. In einer Ausgestaltung wird das Messlicht in einer integrierenden Kugel empfangen und trifft dort die Probe. Das von der Probe diffus reflektierte Licht wird von der Innenwand der integrierenden Kugel effektiv gesammelt.

Aus US 4.320.978 ist Vorrichtung bekannt, bei der zylindrische Probenzellen durch eine integrierende Kugel hindurch laufen und dabei mit einem Messlicht bestrahlt werden. Ein an der Kugelwand angeordneter Sensor empfängt das von der zylindrischen Probenzelle gestreute Licht, das an der Innenwand der integrierenden Kugel reflektiert wird.

Der Erfindung liegt vor diesem Hintergrund die Aufgabe zu Grunde, eine Vorrichtung zu schaffen, die ohne Verwendung von Einmalsensoren und/oder Einmalküvetten für die Messung physiologischer Parameter von in einem extrakorporalen Kreislauf geführtem Blut geeignet ist und die Messwerte zur Verfügung stellt, die eine Regelung von physiologischen Parametern, insbesondere der Blutgaswerte und hier insbesondere der Sauerstoffsättigung erlauben.

Gelöst wird diese Aufgabe durch eine Vorrichtung mit den Merkmalen des Patentanspruchs 1. Vorteilhafte Ausgestaltungen ergeben sich aus den Unteransprüchen.

Die Erfindung wird im folgenden anhand der Zeichnungen genauer erläutert, in denen zeigt:
- Fig.1: ein erstes Ausführungsbeispiel der erfindungsgemäßen Vorrichtung und
- Fig. 2: ein zweites Ausführungsbeispiel der erfindungsgemäßen Vorrichtung.

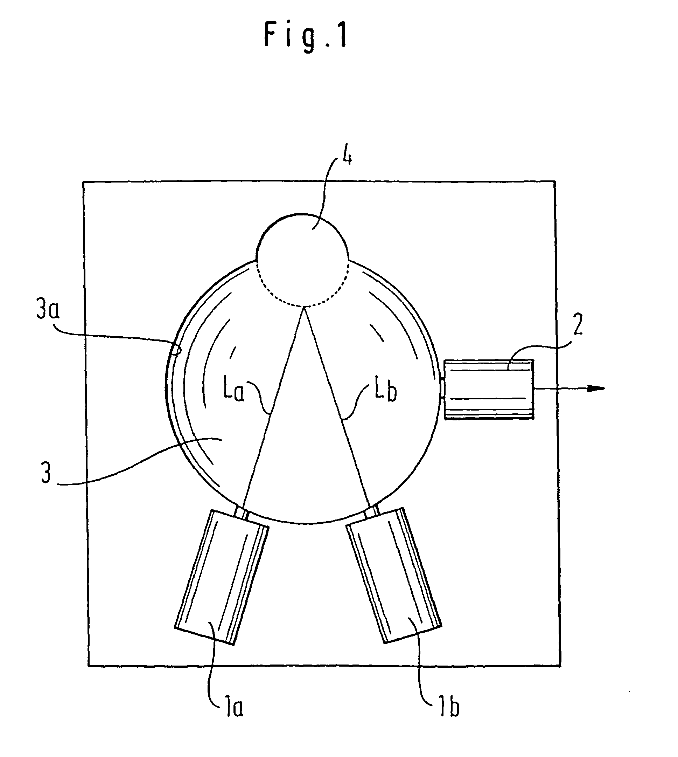

In Fig. 1 ist ein erstes Ausführungsbeispiel der erfindungsgemäßen Vorrichtung für die Messung physiologischer Parameter von in einem extrakorporalen Kreislauf gefördertem Blut dargestellt. Die Vorrichtung umfaßt zwei Lichtquellen 1a und 1b und zumindest eine Sensoreinrichtung 2. Die Lichtquellen 1a und 1b strahlen Licht unterschiedlicher Wellenlänge ab. Das Licht der einen Lichtquelle 1a besitzt vorzugsweise eine Wellenlänge von ca. 805 nm, da für diesen Wert die spektrale Remission von humanem Vollblut unabhängig vom Oxigenisierungsgrad ist (Isobestischer Punkt). Das Licht der zweiten Lichtquelle 1b besitzt eine davon verschiedene Wellenlänge, vorzugsweise entweder im Bereich von 630 nm bis 780 nm oder im Bereich von 980 nm bis 1080 nm. Die relative Remission von humanem Vollblut besitzt in diesen Bereichen eine vergleichsweise große Abhängigkeit vom Oxigenisierungsgrad, so daß sich diese Bereiche für eine Messung besonders gut eignen. Beide Lichtquellen 1a und 1b strahlen ihr Licht in einen kugelförmigen Hohlraum 3 ab, der eine reflektierende, vorzugsweise diffus hochreflektierende, innere Oberfläche besitzt. Besonders geeignet ist eine gleichmäßig mattweiße Oberfläche, die dem Gesetzt des Lambert'schen Strahlers folgt. In den kugelförmigen Hohlraum abgestrahltes Licht, das auf die innere Oberfläche auftrifft, wird diffus reflektiert, so daß auf der inneren Oberfläche des Hohlraums eine homogene Leistungsdichte entsteht, die mit Hilfe der Lichtsensoreinrichtung 2 winkelunabhängig erfaßt werden kann. Dazu ist die Lichtsensoreinrichtung 2 so angeordnet, daß sie einen Teil des sich in dem kugelförmigen Hohlraum ausbreitenden Lichtes empfängt.

Die erfindungsgemäße Vorrichtung besitzt darüber hinaus einen zweiten Hohlraum 4, in den ein Schlauchabschnitt des extrakorporalen Blutkreislaufs eingelegt werden kann. Dabei ist der zweite Hohlraum 4 so ausgestaltet und bezogen auf den ersten, kugelförmigen Hohlraum 3 so angeordnet, daß bei eingelegtem Schlauch das von den Lichtquellen 1a und 1b abgestrahlte Licht Lₐ und L_{b} praktisch nur auf die Grenzfläche zwischen dem Blut und der Innenwand des Schlauches auftrifft. Eine direkte Einstrahlung auf die innere Oberfläche des ersten Hohlraums 3 erfolgt, abgesehen von vernachlässigbarem Streulicht, nicht. Durch Reflektion und, falls der zweite Hohlraum 4 vollständig in den ersten, kugelförmigen Hohlraum 3 hineinragt, auch durch Transmission gelangt ein Teil des eingestrahlten Lichtes in den ersten, kugelförmigen Hohlraum 3 zurück, trifft auf die reflektierende innere Oberfläche 3a des ersten, kugelförmigen Hohlraums 3 und wird, wie oben geschildert, optisch integriert, so daß mit Hilfe der Lichtsensoreinrichtung 2 der vom Blut remittierte bzw. transmittierte Strahlungsanteil winkelunabhängig bestimmt werden kann.

Die mit Hilfe dieser erfindungsgemäßen Vorrichtung ermittelten Werte erlauben eine sehr genaue Bestimmung der der Sauerstoffsättigung, so daß sich die erfindungsgemäße Vorrichtung für den regelungstechnischen Einsatz in einem extrakorporalen Blutkreislauf eignet. So kann das Ausgangssignal der Lichtsensoreinrichtung 2 als Eingangssignal eines Regelkreises verwendet werden, mit dem durch Ansteuerung eines Oxygenators, durch den das Blut im extrakorporalen Kreislauf geführt wird, der Sauerstoffgehalt des Blutes beeinflußt wird.

Wie in Fig. 1 mit Hilfe einer Punktlinie angedeutet, durchdringt bei diesem Ausführungsbeispiel der zweite Hohlraum 4 den ersten, kugelförmigen Hohlraum 3 bereichsweise. Jedoch kann der zweite Hohlraum 4 auch so angeordnet sein, daß er auf seinem gesamten Querschnitt den ersten, kugelförmigen Hohlraums 3 durchdringt. Dabei kann der zweite Hohlraum 4 so liegen, daß er den Mittelpunkt des ersten, kugelförmigen Hohlraums 3 aufnimmt.

Da in dem zweiten Hohlraum 4 ein Schlauchabschnitt des extrakorporalen Kreislaufs eingelegt werden soll, besitzt der zweite Hohlraum 4 vorteilhaft eine zylindrische Form und weist senkrecht zur Längsachse vorzugsweise einen kreisförmigen Querschnitt auf, wie in Fig. 1 gezeigt ist. Jedoch kann der zweite Hohlraum 4 in einer weiteren Ausgestaltung senkrecht zur Längsachse einen von der Kreisform abweichenden Querschnitt, z.B. einen elliptischen Querschnitt aufweisen, wobei dann vorzugsweise die Hauptachse des elliptischen Querschnitts sich in den ersten, kugelförmigen Hohlraum 3 hineinerstreckt. Da der Schlauch eine extrakoproralen Kreislaufs in der Regel flexibel ist, kann seine Form ohne Schwierigkeiten beim Einlegen an die Form des zweiten Hohlraums 4 angepaßt werden. Vorzugsweise ist der zweite Hohlraum 4 so dimensioniert, daß die Außenwand des Schlauches an der Innenwand des zweiten Hohlraums 4 anliegt.

Bei jeder Ausgestaltung, bei der der zweite Hohlraum 4 in den ersten, kugelförmigen Hohlraum 3 hineinragt, insbesondere aber bei der zuletzt angesprochenen zylindrischen Ausgestaltung mit elliptischem Querschnitt, eröffnet sich die Möglichkeit, mit Hilfe des Ausgangssignals der Lichtsensoreinrichtung den Hämatokrit des in dem extrakorporalen Kreislauf geförderten Blutes zu bestimmen, da das Lichtstreuvolumen im Blut mit abnehmendem Hämatokrit zunimmt. Es tritt dadurch zunehmend Streulicht seitlich aus dem Hohlraum 4 aus und dringt in den Hohlraum 3 ein. Durch eine geeignete Auswertung des durch das Streulicht hervorgerufenen Anteil des Sensorsignals kann der Hämatrokrit bestimmt werden.

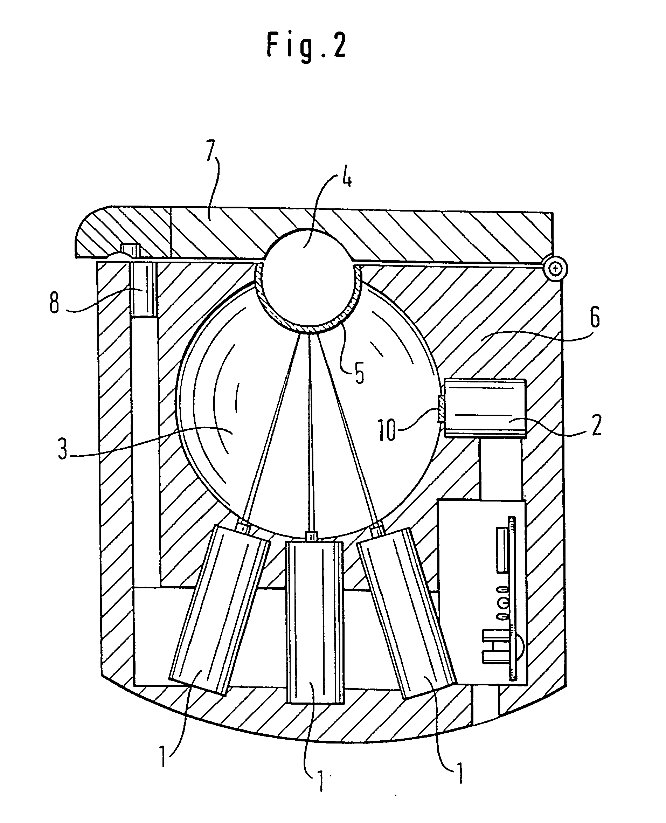

In Fig. 2 ist ein zweites Ausführungsbeispiel dargestellt, das die Grundelemente des ersten Ausführungsbeispiels ebenfalls aufweist, das aber mit dem Ziel, die Genauigkeit weiter zu steigern, und im Hinblick auf den praktischen Einsatz mit weiteren Merkmalen ausgestattet ist.

Die im zweiten Ausführungsbeispiel gezeigten Lichtquellen 1 sind Laserlichtquellen und besitzen vorzugsweise eine integrierte Kollimatoroptik, mit deren Hilfe eine genaue Fokussierung des Laserlichtes auf der Grenzfläche zwischen Blut und Schlauchinnenwand möglich ist. Eine Justage der Vorrichtung ist dann nicht mehr erforderlich. Bei den Laserlichtquellen 1 des zweiten Ausführungsbeispiels handelt es sich vorzugsweise um Laserdioden, die vorteilhaft jeweils eine integrierte Meßdiode (nicht dargestellt) aufweisen, die ein der abgestrahlten Laserlichtleistung entsprechendes Signal erzeugt. Mit Hilfe dieses Meßsignals kann die Laserlichtleistung geregelt werden.

Ferner ist bei dem zweiten Ausführungsbeispiel zwischen dem ersten, kugelförmigen Hohlraum 3 und dem zweiten Hohlraum 4 ein Wandelement 5 vorgesehen, das für das von den Laserlichtquellen 1 abgestrahlte Licht, nicht aber für unerwünschtes Umgebungslicht durchlässig ist. Wie in Fig. 2 gezeigt, folgt die Form des Wandelements 5 vorzugsweise der Form des zweiten Hohlraums 4 und ist dadurch regelmäßig der Form des Schlauchabschnitts angepaßt oder unterstützt die Anpassung des flexiblen Schlauches an die Form des zweiten Hohlraums 4. Zwischen dem ersten Hohlraum 3 und der Lichtsensoreinrichtung 2 ist vorzugsweise ein für das Licht der Lichtquellen 1 durchlässiges Wandelement 10 vorgesehen, das jedoch unerwünschtes Umgebungslicht blockiert.

In Fig. 2 ist ebenfalls erkennbar, daß bei dem zweiten Ausführungseispiel der zweite Hohlraum 4 nur zu einem Teil in einem Grundkörper 6 ausgebildet ist, der zumindest den ersten, kugelförmigen Hohlraum 3 aufnimmt. In dem in Fig. 2 gezeigten Ausführungsbeispiel sind darüber hinaus auch die Laserlichtquellen 1 und die Lichtsensoreinrichtung 2 in dem Grundkörper aufgenommen. Der zweite Hohlraum 4 wird vervollständigt durch einen weiteren Teil, der in einer an dem Grundkörper schwenkbar angebrachten Abdeckung 7 ausgebildet ist. Wird die Abdeckung 7 geöffnet, kann der Schlauchabschnitt in den im Grundkörper ausgebildeten Teil des zweiten Hohlraums 4 eingelegt oder dort heraus genommen werden. Für die Messung wird die Abdeckung 7 geschlossen, so daß der Schlauchabschnitt sicher in dem zweiten Hohlraum 4 gehalten und die Einstrahlung von Umgebungslicht verhindert wird.

Damit bei geöffneter Abdeckung und fehlendem Schlauch kein Laserlicht austreten kann, ist vorzugsweise ein Detektor 8 vorgesehen, der die geschlossene Schwenkstellung der Abdeckung 7 erfaßt und dessen Ausgangssignal dazu verwendet wird, die Abstrahlung von Laserlicht zu unterbrechen, wenn die Abdeckung 7 geöffnet wird.

## Patentansprüche

1. Vorrichtung für die Messung physiologischer Parameter von in einem extrakorporalen Kreislauf gefördertem Blut mit
- zumindest zwei Lichtquellen (1a, 1b), die Licht unterschiedlicher Wellenlänge abstrahlen,
- zumindest einer Lichtsensoreinrichtung (2),
- einem ersten, kugelförmigen Hohlraum (3) mit einer reflektierenden inneren Oberfläche (3a), in den die Lichtquellen (1a, 1b) abstrahlen und aus dem die Lichtsensoreinrichtung (2) einen Teil des sich in dem ersten, kugelförmigen Hohlraum (3) ausbreitenden Lichtes empfängt, und
- einem zweiten Hohlraum (4), in den ein Schlauchabschnitt des extrakorporalen Kreislaufs einlegbar ist, und der so ausgestaltet und bezogen auf den ersten, kugelförmigen Hohlraum (3) so angeordnet ist, dass bei eingelegtem Schlauch, das von den Lichtquellen abgestrahlte Licht (La, Lb) praktisch nur auf die Grenzfläche zwischen dem Blut und einer Innenwand des Schlauches auftrifft, ohne dass eine direkte Einstrahlung auf die innere Oberfläche (3a) des ersten, kugelförmigen Hohlraumes (3), abgesehen von vernachlässigbarem Streulicht, erfolgt, und durch Reflektion und/oder Transmission zumindest teilweise in den ersten, kugelförmigen Hohlraum (3) zurück gelangt.

2. Vorrichtung nach Anspruch 1, **dadurch gekennzeichnet, dass** der zweite Hohlraum (4) den ersten, kugelförmigen Hohlraum (3)zumindest bereichsweise durchdringt.

3. Vorrichtung nach einem der Ansprüche 1 oder 2, **dadurch gekennzeichnet, dass** der zweite Hohlraum (4) zylindrisch ist.

4. Vorrichtung nach Anspruch 3, **dadurch gekennzeichnet, dass** der zweite Hohlraum (4) senkrecht zur Längsachse einen kreisförmigen Querschnitt aufweist.

5. Vorrichtung nach Anspruch 3, **dadurch gekennzeichnet, dass** der zweite Hohlraum (4) senkrecht zur Längsachse einen elliptischen Querschnitt aufweist.

6. Vorrichtung nach Anspruch 5, **dadurch gekennzeichnet, dass** der zweite Hohlraum (4) derart angeordnet ist, dass sich die Hauptachse des elliptischen Querschnitts in den ersten, kugelförmigen Hohlraum (3) hinein erstreckt.

7. Vorrichtung nach einem der Ansprüche 1 bis 6, **dadurch gekennzeichnet, dass** die Lichtquellen Laserlichtquellen (1) sind.

8. Vorrichtung nach Anspruch 7, **dadurch gekennzeichnet, dass** die Laserlichtquellen (1) eine Kollimatoroptik aufweisen.

9. Vorrichtung nach einem der Ansprüche 7 oder 8, **dadurch gekennzeichnet, dass** die Laserlichtquellen (1) Laserdioden sind.

10. Vorrichtung nach Anspruch 9, **dadurch gekennzeichnet, dass** die Laserdioden (1) jeweils eine integrierte Messdiode aufweisen, die ein der abgestrahlten Laserlichtleistung entsprechendes Signal erzeugt.

11. Vorrichtung nach einem der Ansprüche 1 bis 10, **dadurch gekennzeichnet, dass** eine der Lichtquellen (1a; 1) Licht mit einer Wellenlänge von ca. 805 nm abstrahlt und die andere der Lichtquellen (1b; 1) Licht mit einer Wellenlänge entweder im Bereich von 630 nm bis 780 nm oder im Bereich von 980 nm bis 1080 nm abstrahlt.

12. Vorrichtung nach einem der Ansprüche 1 bis 11, **dadurch gekennzeichnet, dass** zwischen dem ersten, kugelförmigen (3) und zweiten Hohlraum (4) ein für das Licht der Lichtquellen durchlässiges Wandelement (5) vorgesehen ist, das jedoch unerwünschtes Umgebungslicht blockiert.

13. Vorrichtung nach einem der Ansprüche 1 bis 12, **dadurch gekennzeichnet, dass** zwischen dem ersten kugelförmigen Hohlraum (3) und der Lichtsensoreinrichtung (2) ein für das Licht der Lichtquellen (1) durchlässiges Wandelement (10) vorgesehen ist, das jedoch unerwünschtes Umgebungslicht blockiert.

14. Vorrichtung nach einem der Ansprüche 1 bis 13, **dadurch gekennzeichnet, dass** ein Grundkörper (6) zur Aufnahme des ersten, kugelförmigen Hohlraums (3) und eines Teils des zweiten Hohlraums (4) und ein Körper (7), der bezogen auf den Grundkörper (6) bewegbar, vorzugsweise schwenkbar ist, zur Aufnahme eines weiteren Teils des zweiten Hohlraums (4) vorgesehen ist.

15. Vorrichtung nach Anspruch 14, **dadurch gekennzeichnet, dass** ein Detektor (8) zur Erfassung der geschlossenen Schwenkstellung des Körpers (7) bezogen auf den Grundkörper (6) vorgesehen ist.

## Claims

1. Apparatus for the measurement of physiological parameters of blood conveyed in an extracorporeal circuit with
- at least two light sources (1a, 1b) which emit light having different wavelengths,
- at least one light sensor device (2),
- a first, spherical cavity (3) with a reflective inner surface (3a) into which the light sources (1a, 1b) emit and from which the light sensor device (2) receives a portion of the light being propagated in the first, spherical cavity (3), and
- a second cavity (4) in which can be laid a hose section of the extracorporeal circuit and which is designed in such a way and, referred to the first, spherical cavity (3), arranged in such a way that, when the hose is inserted, the light emitted by the light sources (La, Lb) impinges practically only on the interface between the blood and an inner wall of the hose, without direct incidence on the inner surface (3a) of the first, spherical cavity (3), apart from negligible scattered light, and by reflection and/or transmission passes at least partially back into the first, spherical cavity (3).

2. Apparatus according to claim 1, **characterised in that** the second cavity (4) at least in part penetrates through the first, spherical cavity (3).

3. Apparatus according to either of claims 1 or 2, **characterised in that** the second cavity (4) is cylindrical.

4. Apparatus according to claim 3, **characterised in that** the second cavity (4) has a circular cross-section perpendicularly to the longitudinal axis.

5. Apparatus according to claim 3, **characterised in that** the second cavity (4) has an elliptical cross-section perpendicularly to the longitudinal axis.

6. Apparatus according to claim 5, **characterised in that** the second cavity (4) is arranged in such a way that the major axis of the elliptical cross-section extends into the first, spherical cavity (3).

7. Apparatus according to any of claims 1 to 6, **characterised in that** the light sources are laser light sources (1).

8. Apparatus according to claim 7, **characterised in that** the laser light sources (1) have a collimator lens.

9. Apparatus according to either of claims 7 or 8, **characterised in that** the laser light sources (1) are laser diodes.

10. Apparatus according to claim 9, **characterised in that** the laser diodes (1) each have an integrated measuring diode which generates a signal corresponding to the laser light output emitted.

11. Apparatus according to any of claims 1 to 10, **characterised in that** one of the light sources (1a; 1) emits light having a wavelength of approximately 805 nm and the other of the light sources (1b; 1) emits light having a wavelength either within the range from 630 nm to 780 nm or within the range from 980 nm to 1080 nm.

12. Apparatus according to any of claims 1 to 11, **characterised in that** between the first, spherical (3) and second (4) cavities is provided a wall element (5) which is permeable to the light of the light sources, but which blocks unwanted ambient light.

13. Apparatus according to any of claims 1 to 12, **characterised in that** between the first, spherical cavity (3) and the light sensor device (2) is provided a wall element (10) which is permeable to the light of the light sources (1), but which blocks unwanted ambient light.

14. Apparatus according to any of claims 1 to 13, **characterised in that** a main body (6) is provided for receiving the first, spherical cavity (3) and part of the second cavity (4), and a body (7) which is movable, preferably pivotable, referred to the main body (6), for receiving a further part of the second cavity (4).

15. Apparatus according to claim 14, **characterised in that** a detector (8) is provided for detecting the closed pivot position of the body (7) referred to the main body (6).

## Revendications

1. Dispositif pour la mesure de paramètres physiologiques du sang transporté dans un circuit extracorporel, comprenant
- au moins deux sources de lumière (1a, 1b) qui émettent de la lumière à une longueur d'onde différente,
- au moins un dispositif de détection de lumière (2),
- un premier espace creux de forme sphérique (3) avec une surface intérieure (3a) réfléchissante dans lequel rayonnent les sources de lumière (1a, 1b) et depuis lequel le dispositif de détection de lumière (2) reçoit une partie de la lumière qui se diffuse dans le premier espace creux de forme sphérique (3), et
- un deuxième espace creux (4) dans lequel peut être déposée une section de tuyau du circuit extracorporel et qui est configuré et disposé par rapport au premier espace creux de forme sphérique (3) de telle sorte que lorsque le tuyau y est déposé, la lumière (La, Lb) émise par les sources de lumière ne vient pratiquement heurter que la surface de délimitation entre le sang et une paroi intérieure du tuyau sans qu'il se produise une radiation incidente directe sur la surface intérieure (3a) du premier espace creux de forme sphérique (3), à l'exception d'une lumière parasite négligeable, et retourne au moins partiellement dans le premier espace creux de forme sphérique (3) par réflexion et/ou transmission.

2. Dispositif selon la revendication 1, **caractérisé en ce que** le deuxième espace creux (4) traverse le premier espace creux de forme sphérique (3) au moins par zones.

3. Dispositif selon l'une des revendications 1 ou 2, **caractérisé en ce que** le deuxième espace creux (4) est cylindrique.

4. Dispositif selon la revendication 3, **caractérisé en ce que** le deuxième espace creux (4) présente perpendiculairement à l'axe longitudinal une section transversale circulaire.

5. Dispositif selon la revendication 3, **caractérisé en ce que** le deuxième espace creux (4) présente perpendiculairement à l'axe longitudinal une section transversale elliptique.

6. Dispositif selon la revendication 5, **caractérisé en ce que** le deuxième espace creux (4) est disposé de telle sorte que l'axe principal de la section transversale elliptique s'étend vers l'intérieur du premier espace creux de forme sphérique (3).

7. Dispositif selon l'une des revendications 1 à 6, **caractérisé en ce que** les sources de lumière sont des sources de lumière laser (1).

8. Dispositif selon la revendication 7, **caractérisé en ce que** les sources de lumière laser (1) présentent un optique collimateur.

9. Dispositif selon l'une des revendications 7 ou 8, **caractérisé en ce que** les sources de lumière laser (1) sont des diodes laser.

10. Dispositif selon la revendication 9, **caractérisé en ce que** les diodes laser (1) présentent respectivement une diode de mesure intégrée qui génère un signal correspondant à la puissance de la lumière laser émise.

11. Dispositif selon l'une des revendications 1 à 10, **caractérisé en ce que** l'une des sources de lumière (1a ; 1) émet de la lumière à une longueur d'onde d'environ 805 nm et l'autre des sources de lumière (1b ; 1) émet de la lumière à une longueur d'onde comprise soit dans la plage de 630 nm à 780 nm, soit dans la plage de 980 nm à 1080 nm.

12. Dispositif selon l'une des revendications 1 à 11, **caractérisé en ce qu'**entre le premier espace creux de forme sphérique (3) et le deuxième espace creux (4) est prévu un élément de paroi (5) transparent pour la lumière des sources de lumière, mais qui bloque cependant de la lumière ambiante indésirable.

13. Dispositif selon l'une des revendications 1 à 12, **caractérisé en ce qu'**entre le premier espace creux de forme sphérique (3) et le dispositif de détection de lumière (2) est prévu un élément de paroi (10) transparent pour la lumière des sources de lumière (1), mais qui bloque cependant de la lumière ambiante indésirable.

14. Dispositif selon l'une des revendications 1 à 13, **caractérisé en ce qu'**il est prévu un corps de base (6) pour la réception du premier espace creux de forme sphérique (3) et une partie du deuxième espace creux (4) ainsi qu'un corps (7) qui est mobile, de préférence pivotant, par rapport au corps de base (6) pour la réception d'une autre partie du deuxième espace creux (4).

15. Dispositif selon la revendication 14, **caractérisé en ce qu'**il est prévu un détecteur (8) pour détecter la position de pivotement fermée du corps (7) par rapport au corps de base (6).
